# EUROPEAN PATENT APPLICATION

(11) **EP 4 684 756 A1**
(43) Date of publication of application: **28.01.2026**
(21) Application number: 25190738.2
(22) Date of filing: 21.07.2025
(51) Int. Cl.: A61C 5/00, A61C 7/08, A61C 7/12, A61C 7/22

(54) **ORTHODONTIC SYSTEM FOR PHASED HYBRID ORTHODONTIC METHOD**

(30) Priority: 22.07.2024 CN 202410981617
(71) Applicant: Tong, Allen Sue-Lin, Foster City, California 94404 (US)
(72) Inventor: Tong, Allen Sue-Lin, Foster City, California 94404 (US)
(74) Representative: Gamba, Alessandro

(57) **Abstract**

An orthodontic system for a phased hybrid orthodontic method includes a level-and-align-dentition aligner unit, a closing-teeth-gap brace unit and a detailing-alignment-and-bite-positioning aligner unit. The level-and-align-dentition aligner unit is configured to be placed on an initial dentition so as to obtain a modified dentition, and a material of the level-and-align-dentition aligner unit includes a thermoplastic polymer. The closing-teeth-gap brace unit is configured to be fixed on the modified dentition so as to obtain a closed-teeth-gap dentition, and the closing-teeth-gap brace unit includes a first metal brace, two second metal braces and two closing members. Each of the two closing members includes a first end, a spring structure, and a second end. The detailing-alignment-and-bite-positioning aligner unit is configured to be placed on the closed-teeth-gap dentition so as to obtain a fixed-form dentition, and a material of the detailing-alignment-and-bite-positioning aligner unit includes a thermoplastic polymer.

## Description

### BACKGROUND

### Technical Field

The present disclosure relates to an orthodontic system and an orthodontic method. More particularly, the present disclosure relates to an orthodontic system and a phased hybrid orthodontic method.

### Description of Related Art

An improper teeth-arrangement influences the chewing function and the oral health, and causes a facial contour deformation and affects the appearance after a long time. Hence, many people undergo an orthodontic treatment to improve the teeth-arrangement shape so as to improve the oral health and the appearance.

Generally, two orthodontic methods may be adopted by users, one is with a conventional metal brace, and the other one is with a transparent aligner. In the method with the conventional metal brace, a plurality of metal braces on teeth are fixed, each tooth is fixed with a single metal brace , and a metal wire is threaded through the metal braces so as to connect the metal braces on the teeth. Moreover, the teeth are pulled to a to-be-corrected position by tightening the metal wire with traction. However, the installation steps of the conventional metal brace are complicated, and the user's oral cavity is easily scratched during the installation. Furthermore, the wearing comfort of the conventional metal brace is low, and the conventional metal brace is with less aesthetic appearance. In the other method with the transparent aligner, the transparent aligner with a transparent shell is placed on the user's teeth. An elastic material of the transparent aligner supplies traction to pull the teeth to a to-be-corrected position. The wearing comfort and the aesthetic appearance of the transparent aligner are better than the conventional metal brace. However, the transparent aligner is only suitable for a small-distance adjustment. A performance of the transparent aligner is not good for the user with seriously irregular teeth-arrangement and problems of teeth-gap closing.

It is necessary to develop an orthodontic method that can be applied to the user with seriously irregular teeth-arrangement and problems of teeth-gap closing, and that is both comfortable and aesthetically pleasing, so as to improve the efficiency and reduce the time period of the orthodontic treatment.

### SUMMARY

According to one aspect of the present disclosure, an orthodontic system for a phased hybrid orthodontic method includes a level-and-align-dentition aligner unit, a closing-teeth-gap brace unit and a detailing-alignment-and-bite-positioning aligner unit. The level-and-align-dentition aligner unit is configured to be placed on an initial dentition so as to obtain a modified dentition, wherein a material of the level-and-align-dentition aligner unit includes a thermoplastic polymer, and the level-and-align-dentition aligner unit corresponds to the initial dentition. The closing-teeth-gap brace unit is configured to be fixed on the modified dentition so as to obtain a closed-teeth-gap dentition, and the closing-teeth-gap brace unit includes a first metal brace, two second metal braces and two closing members. Each of the two closing members includes a first end, a spring structure, and a second end, wherein the first end of one of the two closing members is connected to one end of the first metal brace, the first end of the other one of the two closing members is connected to the other end of the first metal brace, and the second end of each of the two closing members is connected to one end of each of the two second metal braces. The detailing-alignment-and-bite-positioning aligner unit is configured to be placed on the closed-teeth-gap dentition so as to obtain a fixed-form dentition, wherein a material of the detailing-alignment-and-bite-positioning aligner unit includes a thermoplastic polymer, and the detailing-alignment-and-bite-positioning aligner unit corresponds to the closed-teeth-gap dentition.

In one example, the first metal brace can include two fixing tubes, the first end of each of the two closing members can be fixed in one of the two fixing tubes, each of the two second metal braces can further include a tube structure, and the second end of each of the two closing members can be disposed through the tube structure of one of the two second metal braces.

In one example, an inner diameter of the tube structure of each of the two second metal braces can be 1.0 mm to 2.0 mm.

In one example, the first end of each of the two closing members can be disposed through one of the two fixing tubes, and an inner diameter of each of the two fixing tubes can be 1.0 mm to 2.0 mm.

In one example, the second end of each of the two closing members can be with a bending angle, and the bending angle can be 20 degree to 100 degree.

In one example, each of the two second metal braces can include at least two protruding portions.

In one example, the spring structure of each of the two closing members can be a torsional spring, and a wire diameter of the torsional spring can be 0.35 mm to 0.9 mm.

In one example, the spring structure of each of the two closing members can be an extension spring, and a wire diameter of the extension spring can be 0.35 mm to 0.9 mm.

In one example, the first metal brace can be fabricated by a model-forming machine, and the model-forming machine can be a 3D printer or a computer numerical control machine.

In one example, a material of each of the two closing members can include a titanium, a nickel, a cobalt, a chromium or a combination thereof.

In one example, a thickness of the level-and-align-dentition aligner unit can be 0.4 mm to 1.1 mm, and a thickness of the detailing-alignment-and-bite-positioning aligner unit can be 0.4 mm to 1.1 mm.

According to another aspect of the present disclosure, a phased hybrid orthodontic method includes steps as follows. The orthodontic system of the aforementioned aspect is provided. The level-and-align-dentition aligner unit is placed on an initial dentition of a dental arch, and an arrangement of the initial dentition is adjusted so as to obtain a modified dentition. The closing-teeth-gap brace unit is fixed on the modified dentition, and an arrangement of the modified dentition is adjusted so as to obtain a closed-teeth-gap dentition. The detailing-alignment-and-bite-positioning aligner unit is placed on the closed-teeth-gap dentition, and an arrangement of the closed-teeth-gap dentition is adjusted so as to obtain a fixed-form dentition.

In one example, the first metal brace can be adhered to a lingual side of a front tooth of a dental arch with an adhesive material, the two second metal braces can be fixed on back teeth of the dental arch.

In one example, the adhesive material can be a light-curing adhesive or a two-component adhesive.

### BRIEF DESCRIPTION OF THE DRAWINGS

The present disclosure can be more fully understood by reading the following detailed description of the embodiment, with reference made to the accompanying drawings as follows:
Fig. 1 is a structural schematic view of a level-and-align-dentition aligner unit of an orthodontic system according to one embodiment of the present disclosure.
Fig. 2 is a structural schematic view of a closing-teeth-gap brace unit of the orthodontic system according to one example of one embodiment of the present disclosure.
Fig. 3 is schematic view of using the closing-teeth-gap brace unit of the orthodontic system according to Fig. 2.
Fig. 4 is a structural schematic view of a detailing-alignment-and-bite-positioning aligner unit of the orthodontic system according to one embodiment of the present disclosure.
Fig. 5 is a structural schematic view of the closing-teeth-gap brace unit of the orthodontic system according to another example of one embodiment of the present disclosure.
Fig. 6 is a flow chart of a phased hybrid orthodontic method according to another embodiment of the present disclosure.
Fig. 7 is a schematic view of using the level-and-align-dentition aligner unit in the phased hybrid orthodontic method according to Fig. 6.
Fig. 8 is a schematic view of using the closing-teeth-gap brace unit in the phased hybrid orthodontic method according to Fig. 6.
Fig. 9 is a schematic view of using the detailing-alignment-and-bite-positioning aligner unit in the phased hybrid orthodontic method according to Fig. 6.
Fig. 10A is an appearance diagram of an initial dentition of a user in Example 1.
Fig. 10B is an appearance diagram of a fixed-form dentition of the user in Example 1.
Fig. 11A is an appearance diagram of an initial dentition of a user in Comparative example 1.
Fig. 11B is an appearance diagram of a fixed-form dentition of the user in Comparative example 1.
Fig. 12A is a 3D digital scanning image of an initial dentition of a user in Example 2 after removing teeth.
Fig. 12B is a 3D digital scanning image of a fixed-form dentition of the user in Example 2.
Fig. 13A is a 3D digital scanning image of an initial dentition of a user in Comparative example 2 after removing teeth.
Fig. 13B is a 3D digital scanning image of a fixed-form dentition of the user in Comparative example 2.

### DETAILED DESCRIPTION

The present disclosure will be further exemplified by the following specific embodiments. However, the embodiments can be applied to various inventive concepts and can be embodied in various specific ways. The specific embodiments are only for the purposes of description, and are not limited to these practical details thereof. In addition, some conventional structures and elements are illustrated in the drawings in a simple and schematic way, and repeated elements can be presented by the same or similar reference numerals.

### <Orthodontic system>

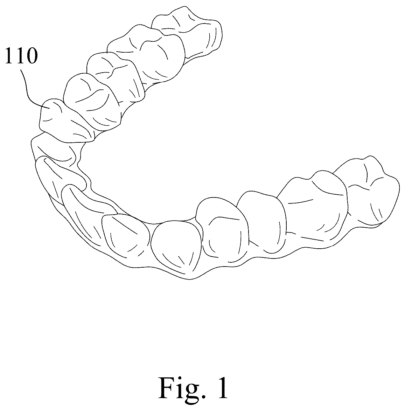

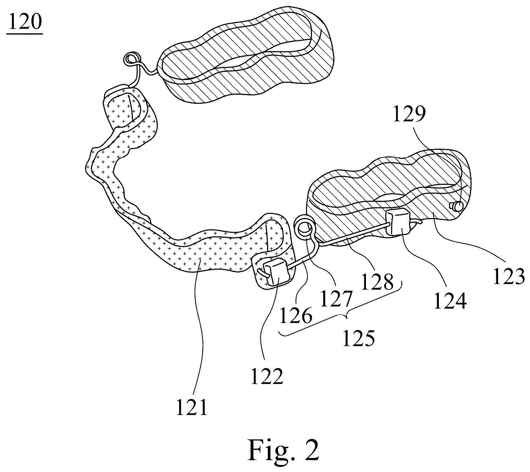

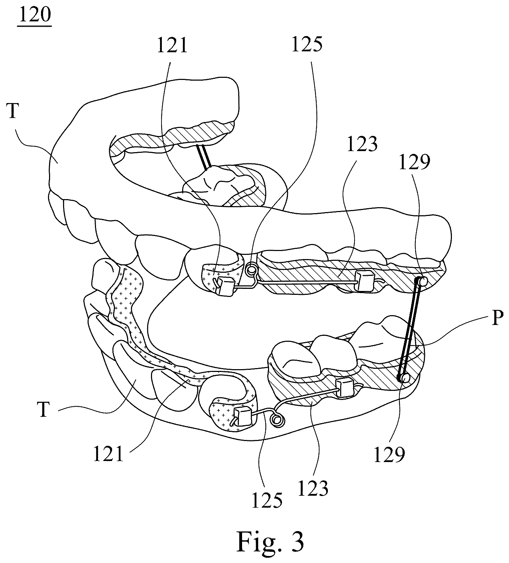

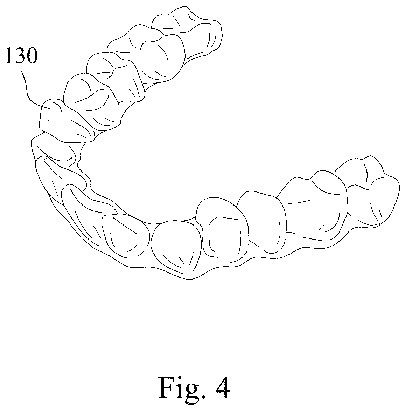

Reference is made to Fig. 1 to Fig. 4. Fig. 1 is a structural schematic view of a level-and-align-dentition aligner unit 110 of an orthodontic system according to one embodiment of the present disclosure, Fig. 2 is a structural schematic view of a closing-teeth-gap brace unit 120 of the orthodontic system according to one example of one embodiment of the present disclosure, Fig. 3 is schematic view of using the closing-teeth-gap brace unit 120 of the orthodontic system according to Fig. 2, and Fig. 4 is a structural schematic view of a detailing-alignment-and-bite-positioning aligner unit 130 of the orthodontic system according to one embodiment of the present disclosure. The orthodontic system for a phased hybrid orthodontic method includes the level-and-align-dentition aligner unit 110, the closing-teeth-gap brace unit 120 and the detailing-alignment-and-bite-positioning aligner unit 130.

The level-and-align-dentition aligner unit 110 is configured to be placed on an initial dentition so as to obtain a modified dentition. A material of the level-and-align-dentition aligner unit 110 includes a thermoplastic polymer, and the level-and-align-dentition aligner unit 110 corresponds to the initial dentition. In detail, in order to fabricate the level-and-align-dentition aligner unit 110, firstly, the digital data of the initial dentition is obtained, and the digital data of the initial dentition includes a teeth-arrangement shape of the initial dentition. A modified dentition model is made according to the digital data of the initial dentition, and the level-and-align-dentition aligner unit 110 can be fabricated according to the modified dentition model. Moreover, the level-and-align-dentition aligner unit 110 can be directly fabricated by a 3D printer according to the digital data of the initial dentition. A thickness of the level-and-align-dentition aligner unit 110 can be 0.4 mm to 1.1 mm. Therefore, the level-and-align-dentition aligner unit 110 can maintain a constant elastic force, and not be deformed by a reaction force from the teeth. Furthermore, the level-and-align-dentition aligner unit 110 can gradually modify the tooth position of the modified dentition so as to avoid an uneven force that causes soreness on a dentition of a user and affects the wearing comfort. Moreover, considering a processing convenience, a material of the level-and-align-dentition aligner unit 110 can be the thermoplastic polymer. At the same time, the material of the level-and-align-dentition aligner unit 110 can be selected from materials with chemical stability and biocompatibility for safety, such as polyethylene terephthalate glycol (PETG), thermoplastic polyurethane (TPU), polypropylene (PP), polycarbonate (PC) and ethylene vinyl acetate (EVA).

The closing-teeth-gap brace unit 120 is configured to be fixed on the modified dentition so as to obtain a closed-teeth-gap dentition. The closing-teeth-gap brace unit 120 includes a first metal brace 121, two second metal braces 123 and two closing members 125. Each of the two closing members 125 includes a first end 126, a spring structure 127 and a second end 128. The first end 126 of one of the two closing members 125 is connected to one end of the first metal brace 121, the first end 126 of the other one of the two closing members 125 is connected to the other end of the first metal brace 121, and the second end 128 of each of the two closing members 125 is connected to one end of each of the two second metal braces 123. Furthermore, each of the two second metal braces 123 can be a closed metal ring, and a thickness of each of the two second metal braces 123 can be 0.5 mm to 3 mm. Preferably, the thickness of each of the two second metal braces 123 can be 1 mm to 3 mm. Therefore, a structural stability of the two second metal braces 123 can be improved. In detail, in order to fabricate the closing-teeth-gap brace unit 120, firstly, the digital data of the modified dentition is obtained, and the digital data of the modified dentition includes a teeth-arrangement shape of the modified dentition. A closed-teeth-gap dentition scan is made according to the modified dentition, and the closing-teeth-gap brace unit 120 can be fabricated according to the closed-teeth-gap dentition scan. The connection of the two closing members 125 of the closing-teeth-gap brace unit 120 with the first metal brace 121 and the connection of the two closing members 125 of the closing-teeth-gap brace unit 120 with the two second metal braces 123 provide the traction from the outside in. Therefore, the tooth movement is affected by the traction from the inside out and the traction from the outside in at the same time, and the tooth movement achieves a traction balance. The traction supplied by the closing-teeth-gap brace unit 120 can avoid risks of the dentition collapsing inward and the dentition skewing outward comparing with the inward traction only or the outward traction only. Moreover, the teeth-arrangement shape can be adjusted quickly by the closing-teeth-gap brace unit 120 with a balance of the moving direction in the dentition.

Furthermore, the first metal brace 121 can include two fixing tubes 122, the first end 126 of each of the two closing members 125 is fixed in one of the two fixing tubes 122, each of the two second metal braces 123 can further include a tube structure 124, and the second end 128 of each of the two closing members 125 can be disposed through the tube structure 124 of one of the two second metal braces 123. An inner diameter of the tube structure 124 of each of the two second metal braces 123 can be 1.0 mm to 2.0 mm. Furthermore, the first end 126 of each of the two closing members 125 can be disposed through one of the two fixing tubes 122, and an inner diameter of each of the two fixing tubes 122 can be 1.0 mm to 2.0 mm. Moreover, the first end 126 of each of the two closing members 125 can be fixed in one of the two fixing tubes 122, and the fixing method can be an adhesion or a locking. Therefore, the connection between the two closing members 125 and the first metal brace 121 is more stable, and it is favorable for the mechanical installation. Further, the second end 128 of each of the two closing members 125 can be disposed through the tube structure 124 of one of the two second metal braces 123, which is favorable for the mechanical installation.

The second end 128 of each of the two closing members 125 is with a bending angle, and the bending angle can be 20 degree to 100 degree. Therefore, it is favorable for improving the connecting stability of the mechanism. Preferably, the bending angle can be 30 degree to 90 degree. Therefore, the stable traction can be provided so as to improve the stability of the anchor-controlling position during closing the teeth-gap so that the front teeth and the back teeth of the dental arches T can be moved stably.

The spring structure 127 of each of the two closing members 125 can be a torsional spring, and a wire diameter of the torsional spring can be 0.35 mm to 0.9 mm. The torsional spring is so-called the helical torsion spring, and is an elastic element that can store the mechanical energy. The torsional spring is usually made of the wire coil. The torsional spring can be a Brody type spring, when the Brody type spring is activated, the spring force maintains constant and does not lost the elasticity. Moreover, the torsional spring would not cause cleaning dead zones while wearing the closing-teeth-gap brace unit 120. When the wire diameter of the torsional spring is 0.35 mm to 0.9 mm, the mechanical strength of the torsional spring is excellent to against the reaction force from the tooth movement and to maintain the stability of the spring force.

The first metal brace 121 can be fabricated by a model-forming machine, and the model-forming machine can be a 3D printer or a computer numerical control (CNC) machine. Therefore, the first metal brace 121 can correspond to the surface morphology of the lingual side of the teeth, and be snugly fixed on the surface of the lingual side of the teeth.

A material of each of the two closing members 125 can include a titanium, a nickel, a cobalt, a chromium or a combination thereof. Therefore, the elastic force of the two closing members 125 is stable and the allergy ricks of the user can be reduced.

Each of the two second metal braces 123 can include at least two protruding portions 129. In Fig. 3, the closing-teeth-gap brace units 120 are fixed to the modified dentition of the upper dental arch T of the user and the modified dentition of the lower dental arch T of the user, respectively. One end of an elastic component P is separably connected to one of the at least two protruding portions 129 belonging to one of the two second metal braces 123, and the other end of the elastic component P is separably connected to one of the at least two protruding portions 129 belonging to the other of the two second metal braces 123. Therefore, additional traction can be provided to adjust the teeth-arrangement shape and improve the orthodontic efficiency of the closing-teeth-gap brace units 120.

The detailing-alignment-and-bite-positioning aligner unit 130 is configured to be placed on the closed-teeth-gap dentition so as to obtain a fixed-form dentition. A material of the detailing-alignment-and-bite-positioning aligner unit 130 includes a thermoplastic polymer, and the detailing-alignment-and-bite-positioning aligner unit 130 corresponds to the closed-teeth-gap dentition. In detail, in order to fabricate the detailing-alignment-and-bite-positioning aligner unit 130, firstly, the digital data of the closed-teeth-gap dentition is obtained, and the digital data of the closed-teeth-gap dentition includes a teeth-arrangement shape of the closed-teeth-gap dentition. A fixed-form dentition model is made according to the digital data of the closed-teeth-gap dentition, and the detailing-alignment-and-bite-positioning aligner unit 130 can be fabricated according to the fixed-form dentition model. Moreover, the detailing-alignment-and-bite-positioning aligner unit 130 can be directly fabricated by a 3D printer according to the digital data of the closed-teeth-gap dentition. A thickness of the detailing-alignment-and-bite-positioning aligner unit 130 can be 0.4 mm to 1.1 mm. Therefore, the detailing-alignment-and-bite-positioning aligner unit 130 can supply an elastic force on the closed-teeth-gap dentition so that the teeth-arrangement shape of the closed-teeth-gap dentition is changed to obtain the fixed-form dentition of the user. The elastic force of the detailing-alignment-and-bite-positioning aligner unit 130 is applied to the closed-teeth-gap dentition, and the elastic force is evenly applied to all teeth of the dental arch T so that the relative moving distance of the teeth is controlled highly and precisely to move the teeth to an expected position. Moreover, a material of the detailing-alignment-and-bite-positioning aligner unit 130 can be the thermoplastic polymer with a processing convenience, and meanwhile the material of the detailing-alignment-and-bite-positioning aligner unit 130 can be selected from materials with chemical stability and biocompatibility for safety, such as polyethylene terephthalate glycol (PETG), thermoplastic polyurethane (TPU), polypropylene (PP), polycarbonate (PC) and ethylene vinyl acetate (EVA).

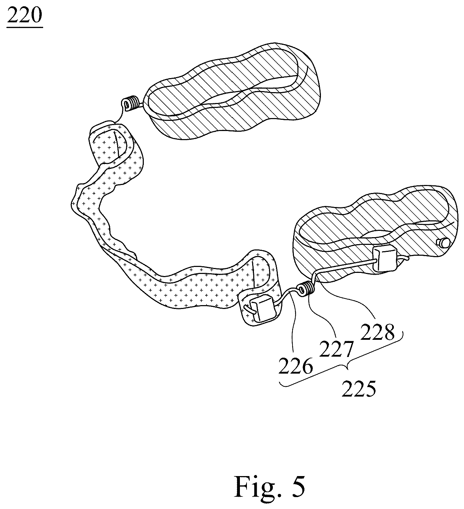

Reference is made to Fig. 5, which is a structural schematic view of the closing-teeth-gap brace unit 220 of the orthodontic system according to another example of one embodiment of the present disclosure. In Fig. 5, each of the two closing members 225 includes a first end 226, a spring structure 227 and a second end 228. The spring structure 227 of each of the two closing members 225 can be an extension spring, and a wire diameter of the extension spring can be 0.35 mm to 0.9 mm. Therefore, the two closing members 225 can bear a larger loading, and maintain its strength over a long time period. Moreover, the characteristics of the two closing members 225 would not change by time or environmental change.

### <Phased hybrid orthodontic method>

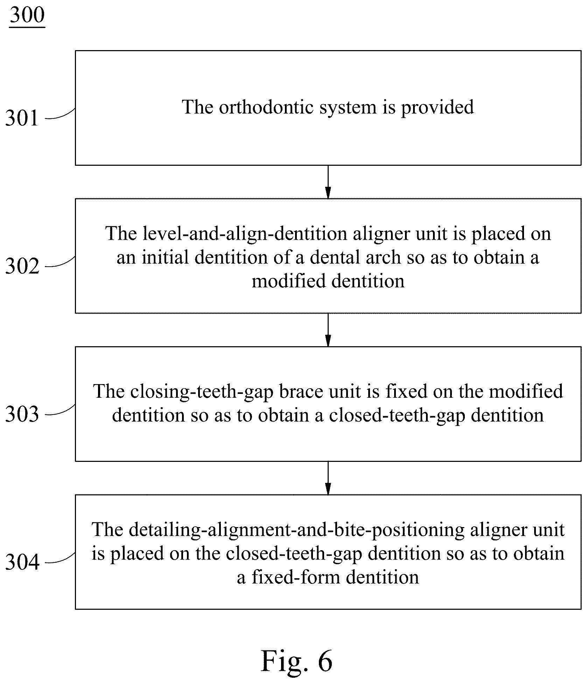

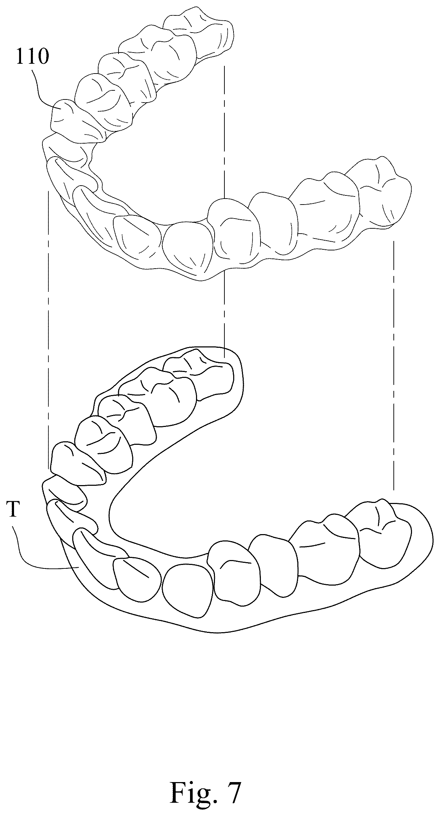

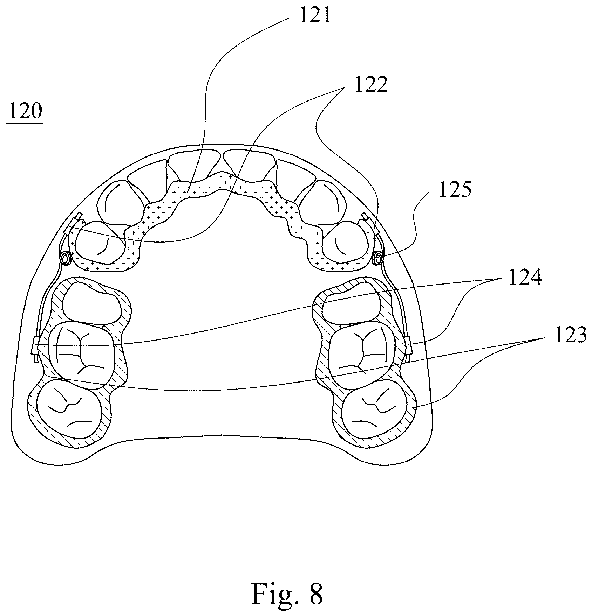

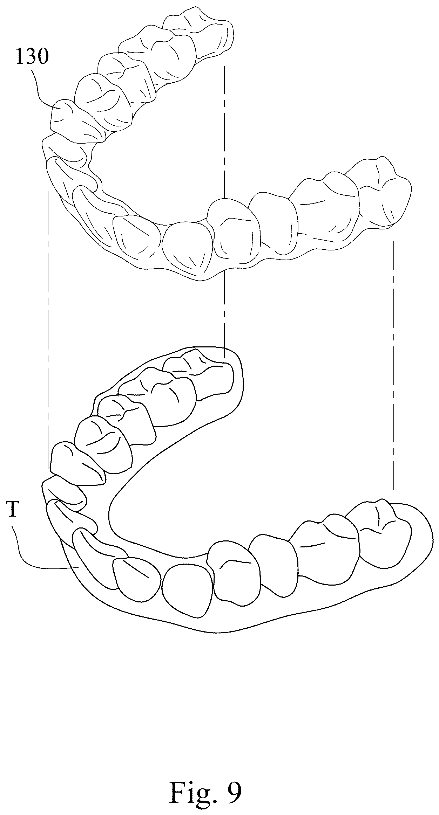

Reference is made to Fig. 6, Fig. 7, Fig. 8 and Fig. 9. Fig. 6 is a flow chart of a phased hybrid orthodontic method 300 according to another embodiment of the present disclosure, Fig. 7 is a schematic view of using the level-and-align-dentition aligner unit 110 in the phased hybrid orthodontic method 300 according to Fig. 6, Fig. 8 is a schematic view of using the closing-teeth-gap brace unit 120 in the phased hybrid orthodontic method 300 according to Fig. 6, and Fig. 9 is a schematic view of using the detailing-alignment-and-bite-positioning aligner unit 130 in the phased hybrid orthodontic method 300 according to Fig. 6. The phased hybrid orthodontic method 300 includes step 301, step 302, step 303 and step 304.

In step 301, the orthodontic system is provided, and the orthodontic system includes the level-and-align-dentition aligner unit 110, the closing-teeth-gap brace unit 120 and the detailing-alignment-and-bite-positioning aligner unit 130.

In step 302, the level-and-align-dentition aligner unit 110 is placed on an initial dentition of the dental arch T, and an arrangement of the initial dentition is adjusted so as to obtain a modified dentition. In detail, the level-and-align-dentition aligner unit 110 corresponds to the initial dentition, and the level-and-align-dentition aligner unit 110 is placed on the initial dentition of the dental arch T with a level-and-align-dentition time period. An elastic force of the level-and-align-dentition aligner unit 110 is applied to the initial dentition so that a teeth-arrangement shape of the initial dentition can be changed to obtain a modified dentition. During the level-and-align-dentition time period, the tooth moving rate is 0.15 mm to 0.35 mm per month. In Fig. 7, the level-and-align-dentition aligner unit 110 is placed on the initial dentition of the dental arch T, and the force from the level-and-align-dentition aligner unit 110 is evenly applied on the teeth so as to achieve a comprehensive dentition modification. The symmetry of the teeth-arrangement shape can be precisely adjusted with a symmetrical center line of the axis of the dental arch T, and the left teeth and the right teeth can be adjusted into mirror symmetry.

In step 303, the closing-teeth-gap brace unit 120 is fixed on the modified dentition, and an arrangement of the modified dentition is adjusted so as to obtain a closed-teeth-gap dentition. In detail, the closing-teeth-gap brace unit 120 is fixed on the modified dentition with a closed-teeth-gap time period so as to obtain the closed-teeth-gap dentition. During the closed-teeth-gap time period, the tooth moving rate is 0.5 mm to 1.5 mm per month. The first metal brace 121 can be adhered to a lingual side of the front teeth of the dental arch T with an adhesive material, and the two second metal braces 123 can be fixed on the back teeth of the dental arch T. Moreover, each of the two second metal braces 123 can be in a shape of a ring and be placed on the back teeth of the dental arch T. In order to enhance the fixing reliability of the two second metal braces 123 on the back teeth, the two second metal braces 123 can be adhered to the back teeth with an adhesive material. For example, the adhesive material can be a light-curing adhesive or a two-component adhesive. Therefore, the adhering efficiency can be improved with an operating convenience. A surface treatment on the lingual side of the front teeth of the dental arch T can be conducted before placing the first metal brace 121 on the lingual side of the front teeth of the dental arch T. The surface treatment can be an etching or a sand blasting. A surface treatment on the back teeth of the dental arch T can be conducted before fixing the two second metal braces 123 on the back teeth of the dental arch T. The surface treatment can be the etching or the sand blasting. Therefore, the stability of the first metal brace 121 and the two second metal braces 123 can be improved so that the reliability of the second-stage orthodontic method will be improved.

In step 304, the detailing-alignment-and-bite-positioning aligner unit 130 is placed on the closed-teeth-gap dentition, and an arrangement of the closed-teeth-gap dentition is adjusted so as to obtain a fixed-form dentition. In detail, the detailing-alignment-and-bite-positioning aligner unit 130 is placed on the closed-teeth-gap dentition with a detailing-alignment-and-bite-positioning time period. In Fig. 9, the elastic force of the detailing-alignment-and-bite-positioning aligner unit 130 is applied to the closed-teeth-gap dentition so that the teeth can be moved to an expected position so as to obtain the fixed-form dentition. During the detailing-alignment-and-bite-positioning time period, the tooth moving rate is 0.15 mm to 1.5 mm per month.

### <Teeth-arrangement shape of fixed-form dentition>

In order to prove that the orthodontic system and the phased hybrid orthodontic method of the present disclosure can improve the teeth-arrangement shape and problems of teeth-gap closing of the user. Users in Example 1 and Example 2 use the orthodontic system and the phased hybrid orthodontic method of the present disclosure. Users in Comparative example 1 and Comparative example 2 use the transparent aligner with the one-stage orthodontic method.

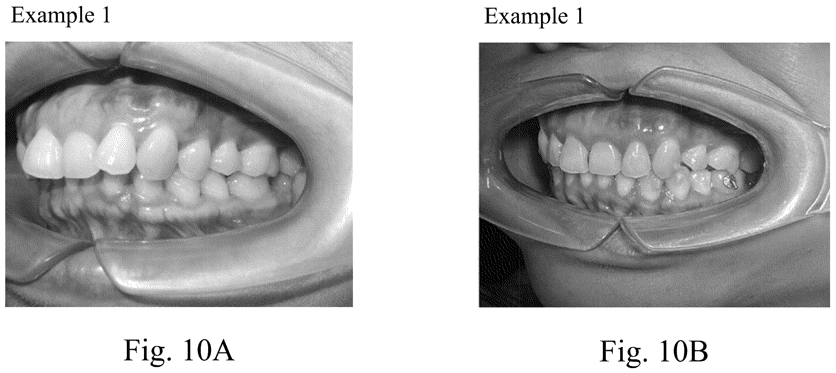

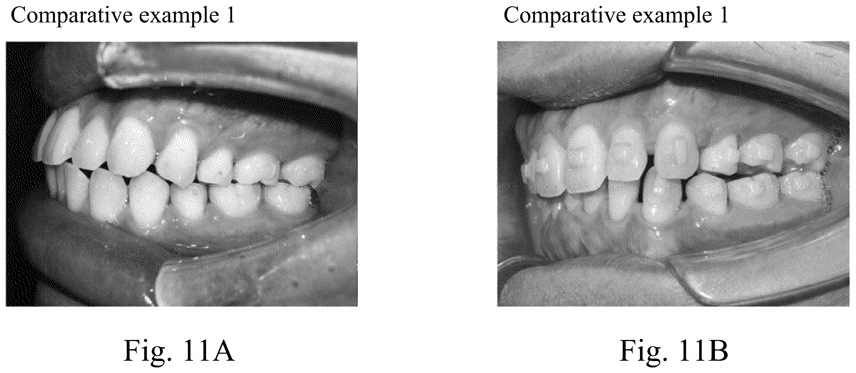

Reference is made to Fig. 10A, Fig. 10B, Fig. 11A and Fig. 11B. Fig. 10A is an appearance diagram of an initial dentition of a user in Example 1, Fig. 10B is an appearance diagram of a fixed-form dentition of the user in Example 1, Fig. 11A is an appearance diagram of an initial dentition of a user in Comparative example 1, and Fig. 11B is an appearance diagram of a fixed-form dentition of the user in Comparative example 1. The aforementioned appearance diagrams are presented in photos. In Fig. 11A and Fig. 11B, the initial dentition of the user in Comparative example 1 tilts outward before the orthodontic treatment, and the fixed-form dentition of the user in Comparative example 1 converges inward after the orthodontic treatment. However, the front teeth of the fixed-form dentition of the user in Comparative example 1 shows a deep-bite teeth-arrangement shape, and the front teeth of the upper dental arch tilts inward so that the upper dental arch cannot correspond to the lower dental arch at the bite-position. Moreover, the back teeth of the fixed-form dentition of the user in Comparative example 1 show the open-bite teeth-arrangement shape, the back teeth tilt, and the teeth-gap is not closed. There are spaces between the teeth, which is not favorable for maintaining the teeth-arrangement shape of the fixed-form dentition of the user in Comparative example 1. In Fig. 10A and Fig. 10B, the teeth-arrangement shape of the initial dentition of the user in Example 1 is irregular and the front teeth tilt outward before the orthodontic treatment, and the teeth of the fixed-form dentition of the user in Example 1 align closely after the orthodontic treatment. The teeth abut each other so that the space is limited for the teeth movement, which is conductive to maintain the teeth-arrangement shape of the fixed-form dentition of the user in Example 1. It can prove that the orthodontic system and the phased hybrid orthodontic method of the present disclosure can improve the teeth-arrangement shape and the shape stability of the fixed-form dentition of the user, and the orthodontic system and the phased hybrid orthodontic method of the present disclosure can solve the problems of the deep-bite of the front teeth and the open-bite of the back teeth in the orthodontic treatment with the transparent aligner.

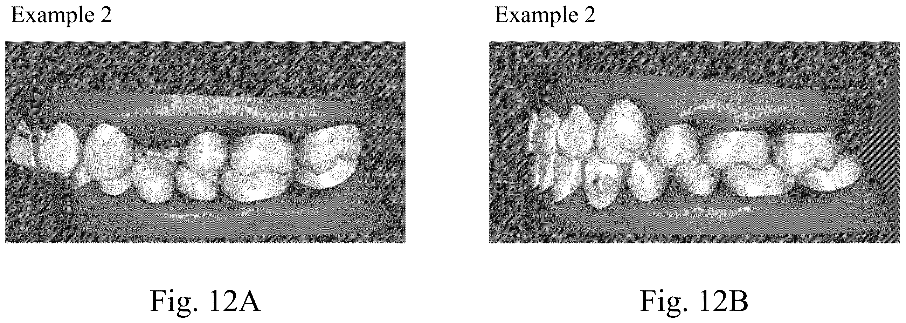

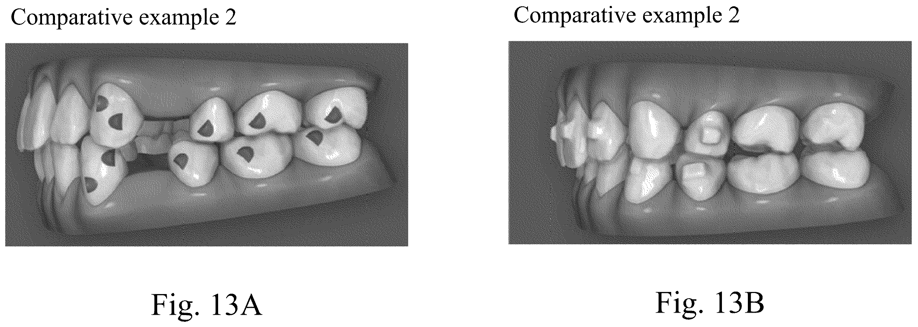

Reference is made to Fig. 12A, Fig. 12B, Fig. 13A and Fig. 13B. Fig. 12A is a 3D digital scanning image of an initial dentition of a user in Example 2 after removing teeth, Fig. 12B is a 3D digital scanning image of a fixed-form dentition of the user in Example 2, Fig. 13A is a 3D digital scanning image of an initial dentition of a user in Comparative example 2 after removing teeth, and Fig. 13B is a 3D digital scanning image of a fixed-form dentition of the user in Comparative example 2. In Fig. 13A and Fig. 13B, there are spaces in the initial dentition of the user in Comparative example 2 after removing teeth, and the teeth-gap of the fixed-form dentition of the user in Example 2 is not closed after the orthodontic treatment. When the gap exists between teeth, there are spaces for teeth moving, which can cause the teeth to tilt toward the lingual site or to tilt outward, and the teeth-arrangement shape of the fixed-form dentition of the user in Comparative example 2 is easily changed to form a more irregular teeth-arrangement shape. In Fig. 12A and Fig. 12B, there are spaces in the initial dentition of the user in Example 2 after removing teeth, and the teeth arrange closely in the fixed-form dentition of the user in Example 2 after the orthodontic treatment. The teeth abut each other to limit the moving space for the teeth, thereby improving the teeth-arrangement stability of the fixed-form dentition of the user in Example 2. It can prove that the orthodontic system and the phased hybrid orthodontic method of the present disclosure can solve problems of teeth-gap closing.

In conclusion, the orthodontic system and the phased hybrid orthodontic method of the present disclosure can provide a proper method to users at different orthodontic stages, that can be for the users with seriously irregular teeth-arrangement and problems of teeth-gap closing. By using the orthodontic system and the phased hybrid orthodontic method of the present disclosure, the teeth-arrangement shape is gradually modified to move the teeth to the expected position. Therefore, the orthodontic system and the phased hybrid orthodontic method of the present disclosure are both comfortable and aesthetically pleasing.

## Claims

1. An orthodontic system for a phased hybrid orthodontic method, **characterized in** comprising:
a level-and-align-dentition aligner unit (110) configured to be placed on an initial dentition so as to obtain a modified dentition, wherein a material of the level-and-align-dentition aligner unit (110) comprises a thermoplastic polymer, and the level-and-align-dentition aligner unit (110) corresponds to the initial dentition;
a closing-teeth-gap brace unit (120) configured to be fixed on the modified dentition so as to obtain a closed-teeth-gap dentition, and the closing-teeth-gap brace unit (120) comprising:
a first metal brace (121);
two second metal braces (123); and
two closing members (125), and each of the two closing members (125) comprising a first end (126), a spring structure (127), and a second end (128), wherein the first end (126) of one of the two closing members (125) is connected to one end of the first metal brace (121), the first end (126) of the other one of the two closing members (125) is connected to the other end of the first metal brace (121), and the second end (128) of each of the two closing members (125) is connected to one end of each of the two second metal braces (123); and
a detailing-alignment-and-bite-positioning aligner unit (130) configured to be placed on the closed-teeth-gap dentition so as to obtain a fixed-form dentition, wherein a material of the detailing-alignment-and-bite-positioning aligner unit (130) comprises a thermoplastic polymer, and the detailing-alignment-and-bite-positioning aligner unit (130) corresponds to the closed-teeth-gap dentition.

2. The orthodontic system of claim 1, wherein the first metal brace (121) comprises two fixing tubes (122), the first end (126) of each of the two closing members (125) is fixed in one of the two fixing tubes (122), each of the two second metal braces (123) further comprises a tube structure (124), and the second end (128) of each of the two closing members (125) is disposed through the tube structure (124) of one of the two second metal braces (123).

3. The orthodontic system of any of claims 1-2, wherein an inner diameter of the tube structure (124) of each of the two second metal braces (123) is 1.0 mm to 2.0 mm.

4. The orthodontic system of any of claims 1-3, wherein the first end (126) of each of the two closing members (125) is disposed through one of the two fixing tubes (122), and an inner diameter of each of the two fixing tubes (122) is 1.0 mm to 2.0 mm.

5. The orthodontic system of any of claims 1-4, wherein the second end (128) of each of the two closing members (125) is with a bending angle, and the bending angle is 20 degree to 100 degree.

6. The orthodontic system of any of claims 1-5, wherein each of the two second metal braces (123) comprises at least two protruding portions (129).

7. The orthodontic system of any of claims 1-6, wherein the spring structure (127) of each of the two closing members (125) is a torsional spring, and a wire diameter of the torsional spring is 0.35 mm to 0.9 mm.

8. The orthodontic system of any of claims 1-6, wherein the spring structure (227) of each of the two closing members (225) is an extension spring, and a wire diameter of the extension spring is 0.35 mm to 0.9 mm.

9. The orthodontic system of any of claims 1-7, wherein the first metal brace (121) is fabricated by a model-forming machine, and the model-forming machine is a 3D printer or a computer numerical control machine.

10. The orthodontic system of any of claims 1-9, wherein a material of each of the two closing members (125) comprises a titanium, a nickel, a cobalt, a chromium or a combination thereof.

11. The orthodontic system of any of claims 1-10, wherein a thickness of the level-and-align-dentition aligner unit (110) is 0.4 mm to 1.1 mm, and a thickness of the detailing-alignment-and-bite-positioning aligner unit (130) is 0.4 mm to 1.1 mm.

12. A phased hybrid orthodontic method (300), **characterized in** comprising:
providing the orthodontic system of any of claims 1-11;
placing the level-and-align-dentition aligner unit (110) on an initial dentition of a dental arch (T), and adjusting an arrangement of the initial dentition so as to obtain a modified dentition;
fixing the closing-teeth-gap brace unit (120) on the modified dentition, and adjusting an arrangement of the modified dentition so as to obtain a closed-teeth-gap dentition; and
placing the detailing-alignment-and-bite-positioning aligner unit (130) on the closed-teeth-gap dentition, and adjusting an arrangement of the closed-teeth-gap dentition so as to obtain a fixed-form dentition.

13. The phased hybrid orthodontic method (300) of claim 12, wherein the first metal brace (121) is adhered to a lingual side of a front tooth of a dental arch (T) with an adhesive material, the two second metal braces (123) are fixed on back teeth of the dental arch (T).

14. The phased hybrid orthodontic method (300) of any of claims 12-13, wherein the adhesive material is a light-curing adhesive or a two-component adhesive.
